# EUROPEAN PATENT APPLICATION

(11) **EP 1 707 422 A1**
(43) Date of publication of application: **04.10.2006**
(21) Application number: 05102570.8
(22) Date of filing: 01.04.2005
(51) Int. Cl.: B60K 15/035

(54) **Electronic venting and mechanical roll over valve**

(71) Applicant: Inergy Automotive Systems Research (SA), 1120 Bruxelles (BE)
(72) Inventor: Hill, David, MI-48382 Commerce Township (US); Mehta, Saurin, MI-48083 Troy (US); McCleary, Scott, MI-48386 White Lake (US); Garabedian, Scott, MI-48092 Warren (US)
(74) Representative: Jacques, Philippe

(57) **Abstract**

Single piece molded valve including a mechanical part (preferably, a float) for performing a ROV function (Roll Over Valve) and an electronic part (electronically controlled solenoid valve) for performing a venting function.

## Description

### Functional Problem

This valve will allow what normally would be two parts molded onto a fuel tank to be combined into one molded on part. The cost of production would be slightly lower since there is only one part to make instead of two. There would also be a reduction in the amount of fuel vapor lines needed. The FLW (Fill Limit venting Valve) is the valve being eliminated in this process.

### Prior Art

The problem has been previously solved through the use of two different ports. The roll over valve has been in use for several years and has traditionally been operated by only the physical tilting action of the tank with no electronic controls. Borg-Warner has patents on the action of venting via an electronically controlled solenoid. There is no known product in existence that combines both actions into one product.

Other solutions have not been 100% successful due to their lack of an integrated product that contains the reliability of a passive float valve and the added functionality of an electromechanical valve.

### Detailed Description

A valve that is actuated mechanically for roll over protection and electronically to selectively vent fuel vapors.

### Drawing / Illustration

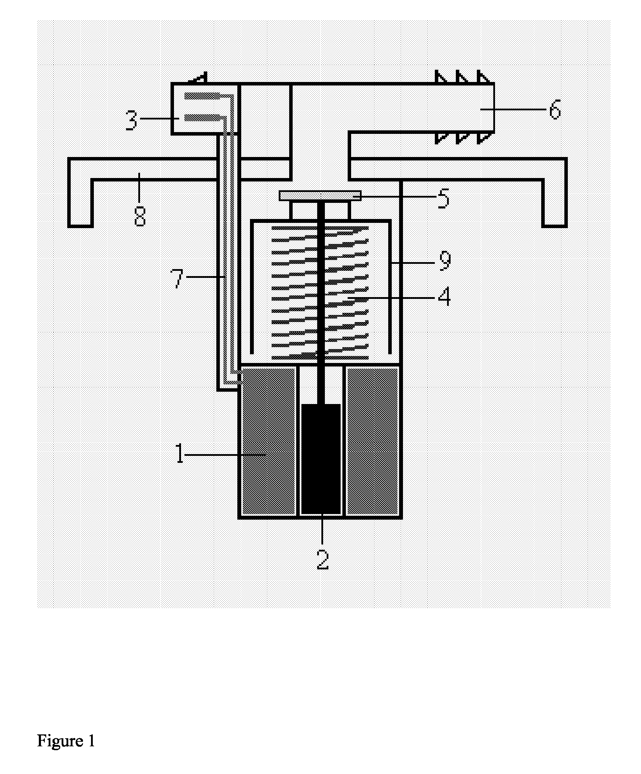

Figure 1 is a cut away view of the inside of the valve. Part number 1 is calling out the magnetic coil that is used to electronically force the valve closed. Part number 2 is the main shaft of the electronic valve. The end of the shaft sits below the sealing plunger (part 5). It pushes upward when energized to close the valve. Part number 3 is the wire harness connector that is necessary for connecting to the coil. Part number 4 is the spring. This helps balance out the weight of the valve shaft (part 2) and the float (part 9) so that the mechanical roll over function of this valve still operates properly. Part number 5 is the sealing plunger. It will provide a leak proof seal when it is force upward to close the valve. Part number 6 is the main port for the fuel vapor outlet. It may not have a barbed type of connection, but something is necessary for it to retain the hose that will be attached. Part number 7 is the electrical connection that is needed from the coil (part 1) to the wire harness connector (part 3). Part number 8 is the top of the outer valve housing that will sit on top of the fuel tank. Part number 9 is the float. When the fuel level is high enough, this is what will mechanically shut the valve.

### Novelty

Functionally the main difference between this and previous solutions is that this is a single unit. One other difference is that the weight of the shaft (part 2) has become somewhat of a replacement for the weighted metal ball that sat at the bottom of some roll over valves. Not all roll over valves have that weight designed into them though. Another feature is that this valve could ideally be mounted inside the flange to eliminate another weld on the tank.

### Non-Obviousness

Prior inventors were not thinking of simplification by integration of their design with other parts. The idea of electronic venting has many aspects that require much research. More than likely they were focusing on getting the control schematic for the electronic venting operating correctly without thinking of the actuator itself.

### Results achieved by the invention solution

It decreases the manufacturing costs by integrating two parts into one. It also provides half the risk of developing a leak by having half as many welds.

### Advantages

The main difference between this and prior solutions is that this is a single unit. One other difference is that the weight of the shaft has become somewhat of a replacement for the weighted metal ball that sat at the bottom of some roll over valves. Not all roll over valves have that weight designed into them though. Another feature is that this valve could ideally be mounted inside the flange to eliminate another weld on the tank.

## Claims

1. Single piece molded valve including a mechanical part (preferably, a float) for performing a ROV function (Roll Over Valve) and an electronic part (electronically controlled solenoid valve) for performing a venting function.

2. Fuel tank integrating such a valve.
